# EUROPEAN PATENT SPECIFICATION

(11) **EP 1 686 058 B1**
(45) Date of publication and mention of the grant of the patent: **21.05.2008**
(21) Application number: 06250422.0
(22) Date of filing: 26.01.2006
(51) Int. Cl.: B64D 41/00, F02C 7/045

(54) **Aircraft inlet assembly for reducing auxiliary power unit noise**
Schalldämpfende Luftversorgung eines Flugzeughilfsaggregats
Insonorisation d'un genérateur auxiliaire d'avion

(30) Priority: 27.01.2005 US 647923 P; 22.06.2005 US 159560
(43) Date of publication of application: 02.08.2006
(73) Proprietor: Honeywell International Inc., Morristown, New Jersey 07962 (US)
(72) Inventor: Brown, Daniel V. c/o Honeywell International Inc., Patent Services, Morristown, NJ 07962 (US); Sheoran, Yogendra Y. c/o Honeywell International Inc., Patent Services, Morristown, NJ 07962 (US)
(74) Representative: Haley, Stephen

(56) References cited:
- EP-A- 0 743 247
- EP-A- 0 807 576
- EP-A- 0 968 918
- WO-A-03/037715
- US-A- 3 698 509

## Description

The present invention relates to aircraft and, more particularly, to a system for decreasing noise propagated by an auxiliary power unit of an aircraft.

Auxiliary power units ("APU") are used in aircraft to provide electrical power and compressed air to various parts therein. When an aircraft is on the ground, its main source of electrical power comes from the APU. In particular, the APU can power the environmental control systems, air drive hydraulic pumps, and the starters for the engines. When an aircraft is in flight, the APU may provide pneumatic and/or electric power to the aircraft.

Typically, APUs are located in the aft section of the aircraft, at or near the tailcone section and include inlet and exhaust ducting that exit through an opening in the aircraft fuselage to allow sufficient air flow through to the APU. For aircraft on which APUs operate during flight, a ram air door is typically provided to protect the APU from foreign object damage when not in use and/or during ground movement, and to maximize total pressure supplied to the APU when performance at altitude is required.
However, while the ram air door is open, noise may propagate from the APU outward from the aircraft fuselage. The noise typically travels through the inlet duet and is deflected from the interior of the ram air door to sections or service locations of the aircraft that are forward the tailcone. Because many aircraft sections are located forward of the APU. such as, for example, passenger doors, passenger and aircraft personnel cabins, refueling points, and baggage doors, audible noise levels heard by those onboard the aircraft or those on the ground while handling baggage or performing aircraft maintenance may be increased.
Therefore, there is a need for an aircraft assembly that minimizes noise propagation from the APU when a ram air door is open. There is also a need for an aircraft assembly that delivers airflow to the APU with a minimum amount of pressure loss. There is also need for the aircraft assembly to be light weight and inexpensive to manufacture. The present invention addresses one or more of these needs.
EP-A-0968918 discloses an auxiliary power unit with a passive cooling system taking cooling air from an external source.
The present invention provides an auxiliary power unit ("APU") (136) installation in an aircraft, the aircraft having a tailcone including a sidewall with a first end and a second end, and an end wall coupled to the sidewall first end, the installation comprising:
a partition disposed within the tailcone and configured to divide the tailcone into a first compartment and a second compartment, the partition including a first opening and a second opening formed therein, and the first compartment configured to damp noise;
an inlet opening formed in the tailcone sidewall in fluid communication with the first compartment;
a first inlet duct extending between the inlet opening and the first compartment;
an APU disposed within the second compartment, and
a second inlet duct extending between the inlet opening and the partition opening to provide communication between the inlet opening and the second compartment; and
a third duct extending from the partition second opening to the APU to thereby provide fluid communication between the APU and the first compartment.
Other independent features and advantages fo the preferred aircraft inlet assembly will become apparent from the following detailed description, taken in conjunction with the accompanying drawings which illustrate, by way of example, the principles of the invention.

FIG. 1 is a side view of a schematic of an aircraft tailcone with a portion of its sidewall removed;

FIG. 2 is a side view of a schematic of another exemplary aircraft inlet assembly with a portion of its sidewall removed;

FIG. 3 is a top view of the exemplary aircraft inlet assembly shown in FIG. 2;

FIG. 4 is a side view of a schematic of still another exemplary aircraft inlet assembly with a portion of its sidewall removed;

FIG. 5 is a top view of the exemplary aircraft inlet assembly shown in FIG. 4;

FIG. 6 is a side view of a schematic of yet another exemplary aircraft inlet assembly with a portion of its sidewall removed;

FIG. 7 is a top view of the exemplary aircraft inlet assembly shown in FIG. 6;

FIG. 8 is a side view of a schematic of yet another exemplary aircraft inlet assembly with a portion of its sidewall removed; and

FIG. 9 is a top view of the exemplary aircraft inlet assembly shown in FIG. 8.

The following detailed description of the invention is merely exemplary in nature and is not intended to limit the invention or the application and uses of the invention. Furthermore, there is no intention to be bound by any theory presented in the preceding background of the invention or the following detailed description of the invention.

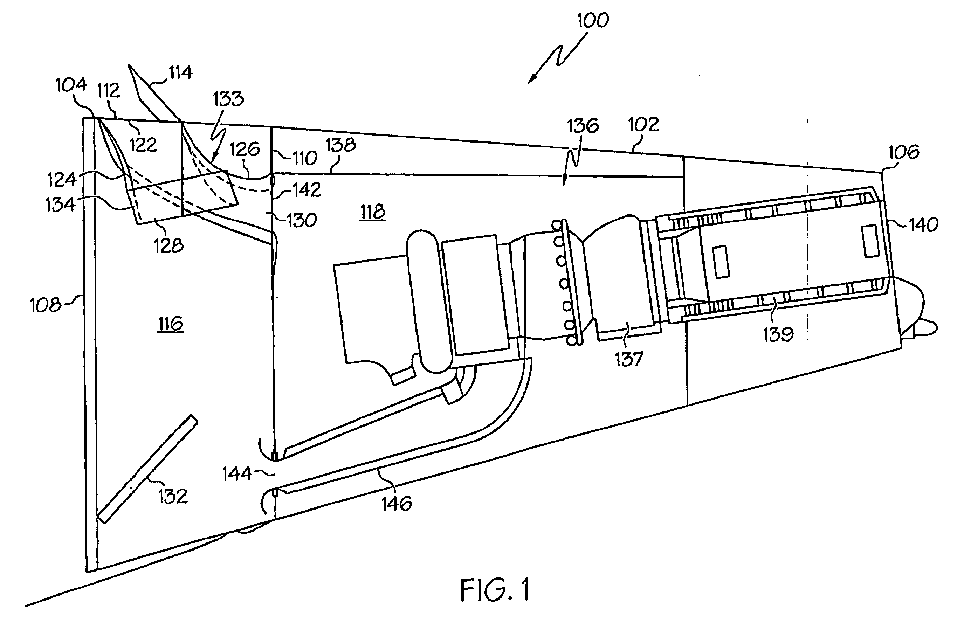

Turning now to the description, FIG. 1 shows a side view of a simplified aircraft tailcone 100 having an auxiliary power unit ("APU") 136 disposed therein. The tailcone 100 includes a tubular sidewall 102, a forward end 104 and an aft end 106. The forward end 104 includes an end wall 108 coupled thereto. Disposed between the forward end 104 and the aft end 106 are an air inlet opening 112 and a partition 110. The air inlet opening 112 is formed in the tailcone sidewall 102 and although shown in FIG. 1 as being formed on a top portion of the sidewall 102 proximate the forward end 104, it will be appreciated that the air inlet opening 112 may be formed in any circumferential position around the tubular sidewall 102. To increase total pressure recovery to the APU 136 while in flight, a ram air door 114 is disposed over the inlet opening 112. The partition 110 is disposed inside the tailcone 100 to divide the tailcone 100 into a first and a second compartment 116, 118. Both compartments 116, 118 communicate with the air inlet opening 112 via a first inlet duct 124 and a second inlet duct 126, respectively. Preferably, the first and second inlet ducts 124, 126 have a side-by-side configuration such that the ram air door 114 services both ducts 124, 126..

The first inlet duct 124 is defined between an inlet 122 and a first outlet 128 and directs air to the first compartment 116. The second inlet duct 126 is defined between the inlet 122 and a second outlet 130, and extends through an opening 142 in the partition 110 to provide air to the second compartment 118.

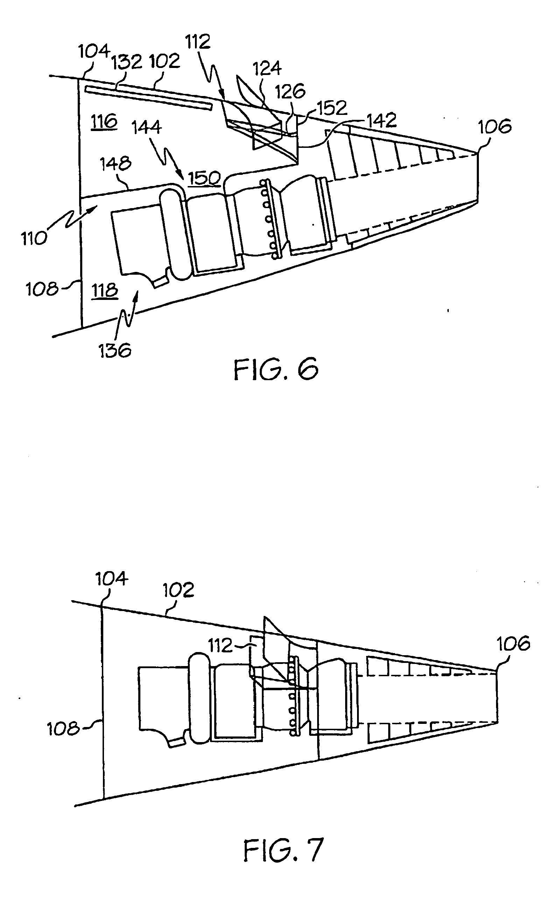

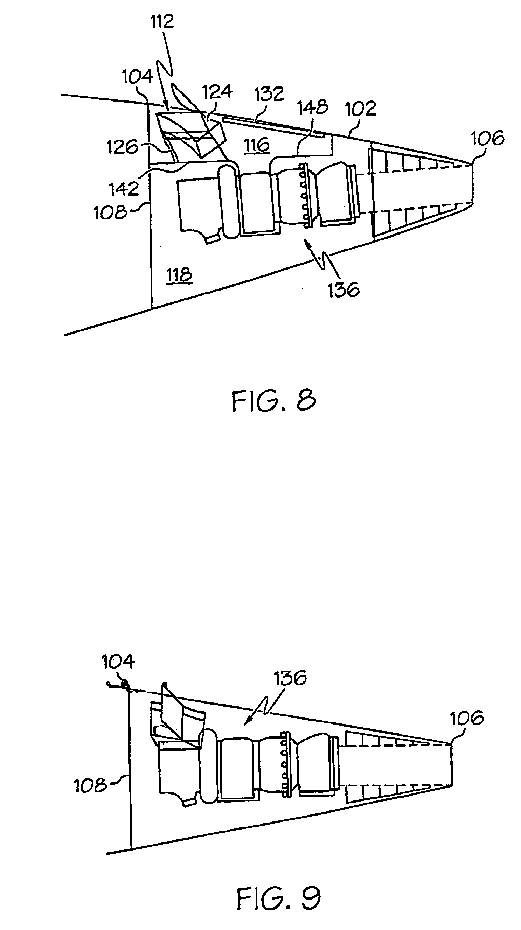

The first compartment 116 isolates and dampens noise that propagates from the APU 136. The noise may be dampened in several ways. In one exemplary embodiment, the first compartment 116 may have one or more sections of acoustically-treated material 132 disposed therein. The acoustically-treated material 132 may be any suitable material capable of damping noise, such as, for example, a porous facesheet bonded to a honeycomb material, a porous facesheet having baffles therein, or a bulk material with or without a facesheet. Additionally, the acoustically-treated material 132 may be disposed in any section of the first compartment 116. In one example, as shown in FIG. 1, the acoustically-treated material 132 is coupled to the end wall 108 towards the bottom of the tailcone 100 and oriented to reflect noise into the first compartment 116. In another example, the acoustically-treated material 132 is coupled to a top portion of the tailcone sidewall 102, as shown in FIGs. 6 and 8. In both cases, the acoustically-treated material 132 causes the APU 136 noise to propagate directly therein thereby maximizing attenuation.

Returning to FIG. 1, the first inlet duct 124 may be configured to cooperate with the first compartment 116 to further dampen noise. In this regard, the first inlet duct may include a dump diffuser 133. The dump diffuser 133 can also minimize aerodynamic losses. Preferably, the dump diffuser 133 has geometric characteristics that provide minimum aerodynamic loss while maintaining a relatively large change in cross-sectional area between the inlet 122 and the first outlet 128. This change in cross-sectional area slows air flow and reduces aerodynamic dump loss into first compartment 116. The first inlet duct 124 may be a straight walled diffuser, or a curved wall diffuser. A curved wall diffuser provides maximum flow velocity reduction while having a relatively short length. In one exemplary embodiment, a section of the first inlet duct 124 proximate the first outlet 128 has walls 134 that flare radially outward at a curvature measured from an axis that extends through the center of the duct 124 that is between about 7 degrees and about 24 degrees.

The second compartment 118 houses the APU 136 and is configured to receive air from the second inlet duct 126 to cool the second compartment 118 and provide air to an oil cooler 137 and eductor system 139 on the APU 136 for cooling oil within the APU 136. The exhaust opening 140 is formed in the sidewall 102 proximate the aft end 106 and communicates with the APU 136 to allow byproducts therefrom to exit the tailcone 100. Similar to the first inlet duct 124, the second inlet duct 126 may be defined as a curved wall dump diffuser to minimize inlet pressure losses.

It will be appreciated that the first compartment 116 and second compartment 118 may have any one of numerous configurations that depend upon the configuration of the partition 110. In one exemplary embodiment, as shown in FIG. 1, the partition 110 is a single wall 148 that extends radially inward from the tailcone sidewall 102 to substantially seal the first compartment 116 from the second compartment 118. The partition 110 includes a first opening 142, as briefly mentioned above, to which the second inlet duct 126 is sealingly coupled. The partition 110 may also serve as a firewall to isolate the second compartment 118 from the first compartment 116.

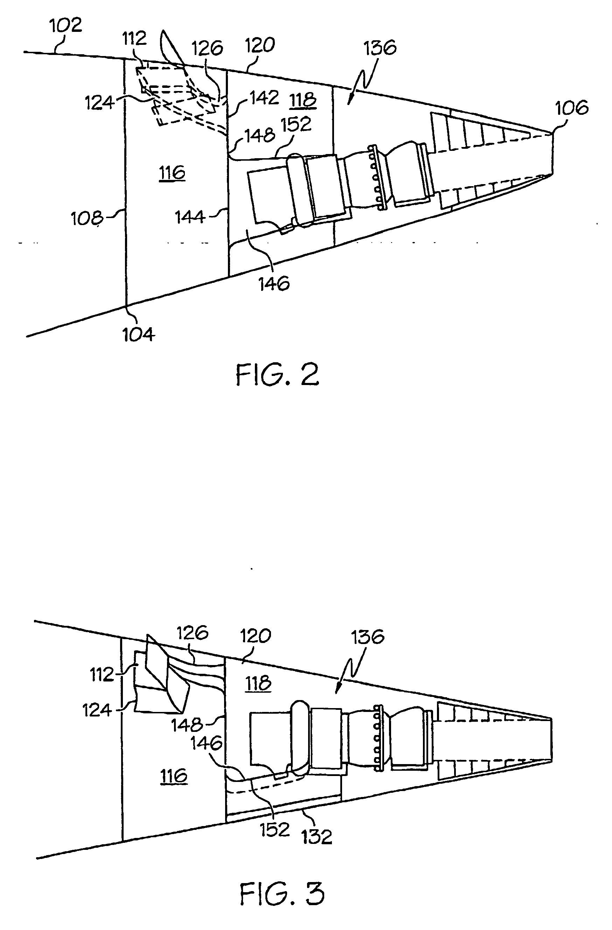

The partition 110 includes a second opening 144 coupled to a side channel 146 that directs air from the first compartment 116 to the APU 136. The side channel 146 may be positioned along any portion of the aircraft, such as, for example along the side of the second compartment 118 as shown in FIGs. 2 and 3. Positioning the side channel 146 on the side of the aircraft allows maintenance personnel easier access to the APU 136. In a preferred embodiment, the cross-sectional area of the side channel 146 proximate the second opening 144 is smaller than the cross-sectional area of the side channel 146 in other sections thereof. In this regard, the acoustic benefit of the side channel 146 is maximized without increasing aerodynamic losses and flow-induced noise beyond acceptable levels. The side channel 146 may have one or more sections of acoustically treated material 132 disposed therein. It will be appreciated that although FIGs. 2 and 3 show the side channel 146 in a single position, it may be placed along any circumferential location around the APU 136

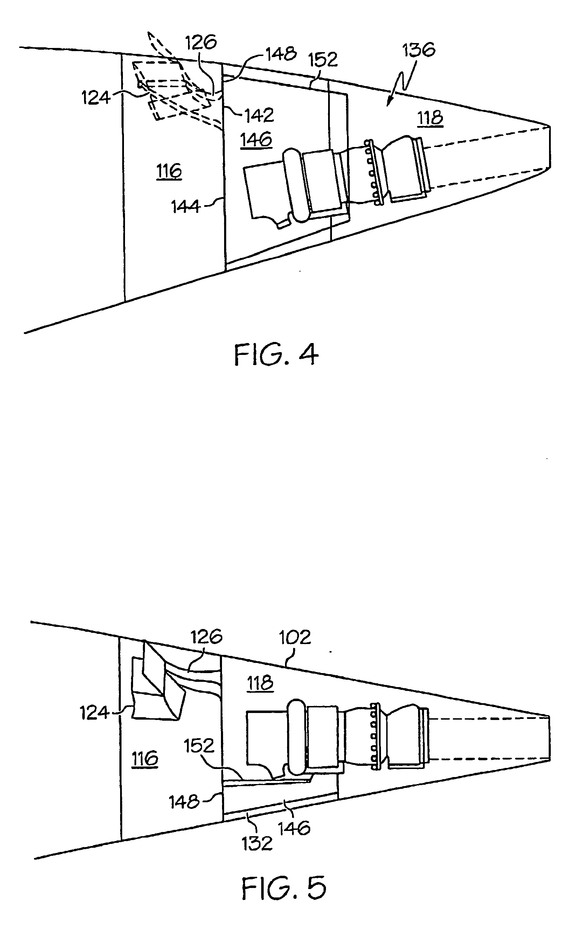

In another exemplary embodiment, as shown in FIGS. 4 and 5, the side channel 146 may be enlarged to define a plenum that communicates with the APU 136. In this case, the partition 110 comprises a plurality of walls. Specifically, the partition 110 includes a first wall 148 within which the second opening 144 is formed and a second wall 152 that extends from the first wall 148. While the plenum 146 is shown on the side of the APU 136, it will be appreciated that the second wall 152 may be oriented along any circumferential position around the APU 136. The plenum 146 may also include acoustically-treated material 132 to decrease noise that propagates therein. The acoustically-treated material 132 may be coupled to the sidewall 102 or any other section of the plenum 146.

Turning now to FIGs. 6 and 7, still another exemplary embodiment is illustrated. In this embodiment, the partition 110, includes the first wall 148 and the second wall 152. However, the first wall 148 is disposed between the APU 136 and the tailcone sidewall 102 and extends aft from the end wall 108. The first wall 148 includes opening 144 formed therein that communicates directly with the APU 136 via a duct 150. The second wall 152 extends from the first wall 148 to the tailcone sidewall 102 and includes opening 142 through which the second inlet duct 126 communicates with the second compartment 118. Although the air inlet opening 112 is shown disposed substantially in the middle of the tailcone 100, it will be appreciated that the air inlet opening 112 may be formed in any other suitable section of the tailcone 100. For example, as shown in FIGs. 8 and 9, the air inlet opening 112 may be formed proximate the forward end 104 of the tailcone 100. In such case, the opening 142 through which the second inlet duct 126 communicates with the second compartment 118 may be formed in the first wall 148.

## Claims

1. An auxiliary power unit ("APU") (136) installation in an aircraft, the aircraft having a tailcone (100) including a sidewall (102) with a first end (104) and a second end (106), and an end wall (108) coupled to the sidewall first end (104), the installation comprising:
a partition (110) disposed within the tailcone (100) and configured to divide the tailcone (100) into a first compartment (116) and a second compartment (118), the partition (110) including a first opening (142) and a second opening (144) formed therein, and the first compartment configured to damp noise;
an inlet opening (112) formed in the tailcone sidewall (102) in fluid communication with the first compartment (116);
a first inlet duct (124) extending between the inlet opening (112) and the first compartment (116);
an APU (136) disposed within the second compartment (118); and
a second inlet duct (126) extending between the inlet opening (112) and the partition opening (142) to provide communication between the inlet opening (112) and the second compartment (118); and
a third duct (146) extending from the partition second opening (144) to the APU (136) to thereby provide fluid communication between the APU (136) and the first compartment (116).

2. The assembly of claim 1, wherein the inlet opening (112) is formed along a circumferential portion of the tailcone sidewall (102).

3. The assembly of claim 1, wherein the first inlet duct (124) and the second inlet duct (126) have a side-by-side configuration.

4. The assembly of claim 1, further comprising:
a wall (152) extending from the partition (110) to the APU (136); and
a side plenum (146) defined between the wall (152) and the tailcone sidewall (102), wherein the side plenum (146) is in communication with the second opening (144).

5. The assembly of claim 4, further comprising an acoustically-treated material (132) disposed within the side plenum (146).

6. The assembly of claim 1, further comprising an acoustically-treated material (132) disposed within the first compartment (116).

7. The assembly of claim 1, wherein the partition (110) includes a first wall (148) that is disposed between the APU (136) and the tailcone sidewall (102) and extends from the tailcone forward end (104) aft and a second wall (152) extending from the first wall (148) to the tailcone sidewall (102).

## Patentansprüche

1. Hilfsaggregat -("APU" - auxiliary power unit)-(136)-Anlage in einem Flugzeug, wobei das Flugzeug einen Heckkonus (100) aufweist, der eine Seitenwand (102) mit einem ersten Ende (104) und einem zweiten Ende (106) und eine mit dem ersten Ende (104) der Seitenwand verbundene Endwand (108) enthält, wobei die Anlage Folgendes umfasst:
eine im Heckkonus (100) angeordnete Trennwand (110), die dazu konfiguriert ist, den Heckkonus (100) in eine erste Kammer (116) und eine zweite Kammer (118) zu trennen, wobei die Trennwand (110) eine darin ausgebildete erste Öffnung (142) und
zweite Öffnung (144) enthält und die erste Kammer zur Schalldämpfung konfiguriert ist;
eine in der Seitenwand (102) des Heckkonus ausgebildete Einlassöffnung (112), die mit der ersten Kammer (116) in Strömungsverbindung steht;
einen ersten Einlasskanal (124), der sich zwischen der Einlassöffnung (112) und der ersten Kammer (116) erstreckt;
ein in der zweiten Kammer (118) angeordnetes APU (136); und
einen zweiten Einlasskanal (126), der sich zwischen der Einlassöffnung (112) und der Trennwandöffnung (142) erstreckt, um eine Verbindung zwischen der Einlassöffnung (112) und der zweiten Kammer (118) herzustellen; und
einen dritten Kanal (146), der sich von der zweiten Öffnung (144) der Trennwand zum APU (136) erstreckt, um **dadurch** eine Strömungsverbindung zwischen dem APU (136) und der ersten Kammer (116) herzustellen.

2. Anordnung nach Anspruch 1, wobei die Einlassöffnung (112) entlang einem Umfangsteil der Seitenwand (102) des Heckkonus ausgebildet ist.

3. Anordnung nach Anspruch 1, wobei der erste Einlasskanal (124) und der zweite Einlasskanal (126) eine nebeneinander liegende Konfiguration aufweisen.

4. Anordnung nach Anspruch 1, die weiterhin Folgendes umfasst:
eine sich von der Trennwand (110) zum APU (136) erstreckende Wand (152); und
eine zwischen der Wand (152) und der Seitenwand (102) des Heckkonus definierte Seitensammelkammer (146), wobei die Seitensammelkammer (146) mit der zweiten Öffnung (144) in Verbindung steht.

5. Anordnung nach Anspruch 4, die weiterhin ein akustisch behandeltes Material (132) umfasst, das in der Seitensammelkammer (146) angeordnet ist.

6. Anordnung nach Anspruch 1, die weiterhin ein akustisch behandeltes Material (132) umfasst, das in der ersten Kammer (116) angeordnet ist.

7. Anordnung nach Anspruch 1, wobei die Trennwand (110) eine erste Wand (148), die zwischen dem APU (136) und der Seitenwand (102) des Heckkonus angeordnet ist und sich vom vorderen Ende (104) des Heckkonus nach hinten erstreckt, und eine zweite Wand (152), die sich von der ersten Wand (148) zur Seitenwand (102) des Heckkonus erstreckt, enthält.

## Revendications

1. Installation de générateur auxiliaire ("APU") (136) dans un avion, l'avion étant doté d'un cône (100) de queue comprenant une paroi latérale (102) présentant une première extrémité (104) et une deuxième extrémité (106), et un fond (108) couplé à la première extrémité (104) de la paroi latérale, l'installation comportant:
une cloison (110) disposée à l'intérieur du cône (100) de queue et configurée de façon à diviser le cône (100) de queue en un premier compartiment (116) et un deuxième compartiment (118), la cloison (110) comprenant une première ouverture (142) et une deuxième, ouverture (144) formées dans celle-ci, et le premier compartiment étant configuré de façon à atténuer le bruit ;
une ouverture (112) d'admission formée dans la paroi latérale (102) du cône de queue, en communication fluidique avec le premier compartiment (116) ;
un premier conduit (124) d'admission s'étendant entre l'ouverture (112) d'admission et le premier compartiment (116) ;
un APU (136) disposé à l'intérieur du deuxième compartiment (118) ; et
un deuxième conduit (126) d'admission s'étendant entre l'ouverture (112) d'admission et l'ouverture (142) dans la cloison afin d'assurer une communication entre l'ouverture (112) d'admission et le deuxième compartiment (118) ; et
un troisième conduit (146) s'étendant de la deuxième ouverture (144) dans la cloison à l'APU (136) pour assurer ainsi une communication fluidique entre l'APU (136) et le premier compartiment (116).

2. Ensemble selon la revendication 1, l'ouverture (112) d'admission étant formée le long d'une partie circonférentielle de la paroi latérale (102) du cône de queue.

3. Ensemble selon la revendication 1, le premier conduit (124) d'admission et le deuxième conduit (126) d'admission étant configurés côte à côte.

4. Ensemble selon la revendication 1, comportant en outre :
une paroi (152) s'étendant de la cloison (110) à l'APU (136) ; et
un collecteur latéral (146) défini entre la paroi (152) et la paroi latérale (102) du cône de queue, le collecteur latéral (146) étant en communication avec la deuxième ouverture (144).

5. Ensemble selon la revendication 4, comportant en outre un matériau (132) traité acoustiquement disposé à l'intérieur du collecteur latéral (146).

6. Ensemble selon la revendication 1, comportant en outre un matériau (132) traité acoustiquement disposé à l'intérieur du premier compartiment (116).

7. Ensemble selon la revendication 1, la cloison (110) comprenant une première paroi (148) disposée entre l'APU (136) et la paroi latérale (102) du cône de queue et s'étendant vers l'arrière à partir de l'extrémité avant (104) du cône de queue, et une deuxième paroi (152) s'étendant de la première paroi (148) à la paroi latérale (102) du cône de queue.
